(19) Europäisches Patentamt
European Patent Office
Office européen des brevets

(11) EP 1 566 913 A1

## (12) EUROPEAN PATENT APPLICATION

(43) Date of publication:
24.08.2005 Bulletin 2005/34

(51) Int Cl.7: **H04L 1/00**, H04Q 7/38, H04B 7/26

(21) Application number: 05003483.4

(22) Date of filing: 18.02.2005

(84) Designated Contracting States:
AT BE BG CH CY CZ DE DK EE ES FI FR GB GR HU IE IS IT LI LT LU MC NL PL PT RO SE SI SK TR
Designated Extension States:
AL BA HR LV MK YU

(30) Priority: 18.02.2004 KR 2004010763

(71) Applicant: SAMSUNG ELECTRONICS CO., LTD.
Gyeonggi-do (KR)

(72) Inventors:
• Kim, Noh-Sun c/o Samsung Electronics Co., Ltd.
Suwon-si Gyeonggi-do (KR)

• Kim, Hun-Kee c/o Samsung Electronics Co., Ltd.
Suwon-si Gyeonggi-do (KR)
• Jung, Hea-Kyoung
c/o Samsung Electronics Co., Ltd.
Suwon-si Gyeonggi-do (KR)
• Kim, Seong-Hwan
c/o Samsung Electronics Co., Ltd.
Suwon-si Gyeonggi-do (KR)

(74) Representative: Lang, Johannes
Paten-und Rechtsanwälte,
Bardehle Pagenberg Dost Altenberg Geissler
Galileiplatz 1
81679 München (DE)

(54) **Apparatus and method for transmitting control information for transmission of high-speed packet data in a mobile communication system**

(57) An apparatus and method for transmitting/receiving packet data in a mobile communication system. A first transceiver transmits packet data and control information for enabling demodulation of the packet data to a second transceiver. The second transceiver receives the control information and the packet data, demodulates the packet data according to the control information, and transmits ACK/NACK information indicating whether there is an error in the packet data, and channel state information for the second transceiver, to the first transceiver. The second transceiver transmits channel state information to the first transceiver according to a predetermined channel state information transmission cycle, and transmits channel state information regardless of the channel state information transmission cycle upon receiving an on-demand channel quality indicator (ODC) from the first transceiver.

FIG.5

EP 1 566 913 A1

**Description**

**BACKGROUND OF THE INVENTION**

Field of the Invention:

The present invention relates generally to an apparatus and method for transmitting control information for retransmission of high-speed packet data in a Wideband Code Division Multiple Access (WCDMA) mobile communication system. In particular, the present invention relates to an apparatus and method for transmitting/receiving an on-demand channel quality indicator (CQI) also known as an On-Demand CQI or ODC using a control channel, for retransmission of high-speed packet data.

Description of the Related Art

Mobile communication systems are evolving into high-speed, high-quality radio data packet communication systems for providing a data service and a multimedia service surpassing the early voice-oriented service. For a 3rd generation (3G) mobile communication system, which is divided into an asynchronous 3rd Generation Partnership Project (3GPP) system and a synchronous 3rd Generation Partnership Project 2 (3GPP2) system, standardization of a high-speed, high-quality radio data packet service is being carried out in release 5 (Rel'5).

For example, standardization on High Speed Downlink Packet Access (HSDPA) is being carried out in 3GPP, while standardization on First Evolution-Data and Voice (1xEV-DV) is being achieved in 3GPP2. Standardization is a typical effort to find a solution for providing a high-speed, high-quality radio data packet transmission service at 2Mbps or higher in a 3G mobile communication system. A 4th generation (4G) mobile communication system aims at providing a high-speed, high-quality multimedia service at a much higher rate.

Also, Enhanced Uplink Dedicated Channel (EU-DCH) which is under discussion in Rel'6 is another effort to transmit a high-speed, high-quality radio data packet in an uplink.

Generally, in a mobile communication system, a high-speed, high-quality data service deteriorates due to variations in a radio channel environment. A radio communication channel experiences frequent changes in channel environment due to a variation in signal power caused by fading as well as white noises, Doppler effect caused by movement and a frequent variation in velocity of a shadowing terminal, and interference caused by the other users and multipath signals.

Therefore, in order to provide high-speed, high-quality radio data packet service, there is a demand for another type of advanced technology capable of increasing adaptability to the channel variation in addition to the conventional technologies provided in the existing 2G or 3G mobile communication system. Although a fast power control scheme adopted in the existing system also increases adaptability to the channel variation, both 3GPP and 3GPP2 committees conducting standardization on a high-speed data packet transmission system propose a Adaptive Modulation & Coding Scheme (AMCS) and a Hybrid Automatic Repeat reQuest (HARQ) scheme.

AMCS refers to a scheme for adaptively changing a modulation scheme and a coding rate of a channel encoder according to a variation in channel environment of a downlink. Generally, a user equipment (UE) measures a signal-to-noise ratio (SNR) and transmits the measurement information to a Node B through an uplink so that the Node B can determine the channel environment of a downlink. The Node B estimates an environment of a downlink channel based on the measurement information, and selects an appropriate modulation scheme and coding rate of a channel encoder based on the estimated value.

Therefore, a system using AMCS applies a high-order modulation scheme such as 16 Quadrature Amplitude Modulation (16QAM) or 64QAM and a high coding rate of 3/4 to a UE located close to a Node B, having a good channel environment, and applies a low-order modulation scheme and a low coding rate of 1/2 to a UE located in a cell boundary. Compared with the existing scheme dependent on fast power control, AMCS reduces interference signals, thereby improving system performance on average.

HARQ refers to a link control scheme used to retransmit a transmission-failed packet for error compensation when there is an error in an initially transmitted data packet.

Although AMCS and HARQ are independent technologies for increasing adaptability to a link variation, a combination of the two schemes can greatly improve system performance.

That is, once a modulation scheme and a coding rate of a channel encoder, appropriate for a downlink channel condition, are determined using AMCS, a data packet corresponding thereto is transmitted, and if a receiver fails to decode the transmitted data packet, it requests retransmission of the failed data packet. In response to the retransmission request from the receiver, a Node B retransmits a predetermined data packet based on HARQ.

Although the foregoing schemes can be used in HSDPA, 1xEV-DV, and EU-DCH, a description of the present invention will be made with reference to channels adopted in HSDPA, for convenience.

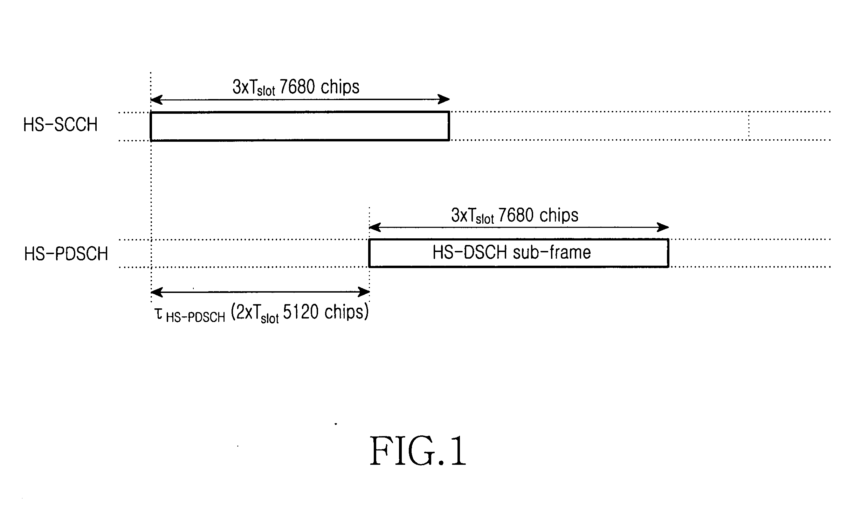

FIG. 1 is a diagram illustrating a timing relationship between a high speed shared control channel (HS-SCCH) and a high speed physical downlink shared channel (HS-PDSCH), two channels adopted to support high-speed downlink packet transmission. The HS-SCCH is a channel for transmitting control information for supporting the HS-PDSCH.

The HS-SCCH and the HS-PDSCH each include a 10-ms frame comprising 5 subframes, and each of the subframes comprises 3 slots.

As illustrated in FIG. 1, a UE receives a HS-SCCH including control information, transmitted two slots ahead of a HS-PDSCH, and demodulates the received HS-SCCH. That is, the UE pre-acquires control information necessary for demodulation of the HS-PDSCH.

The HS-SCCH is divided into two parts as illustrated in Table 1, and each part includes the following information.

Table 1

| 1st part | 2nd part |
|---|---|
| Channelization code set info (7) | Transport block size info (6) |
| Modulation scheme info (1) | Hybrid ARQ process ID (3) |
| | Redundancy and constellation version info (3) |
| | New data indicator (1) |
| | UE-ID (16) |

A UE should monitor a maximum of 4 HS-SCCHs and analyze one of the HS-SCCHs, uniquely allocated thereto. Specifically, the UE analyzes one of the 4 HS-SCCHs whether the HS-SCCH includes control information transmitted thereto, and if it includes the control information transmitted thereto, demodulates the HS-SCCH depending on the control information. However, if the HS-SCCH does not include control information transmitted thereto, the UE analyzes the next HS-SCCH.

A detailed description will now be made of control information bits transmitted over the HS-SCCH illustrated in Table 1.

A channelization code set (CCS) is information indicating the number of channelization codes through which an HS-PDSCH has been transmitted. As illustrated in Table 1, the CCS is transmitted with 7 bits.

A UE acquires the number of codes required for despreading and the type of the codes, through the CCS. In the current standard, a maximum of 15 channelization codes can be used for an HS-PDSCH.

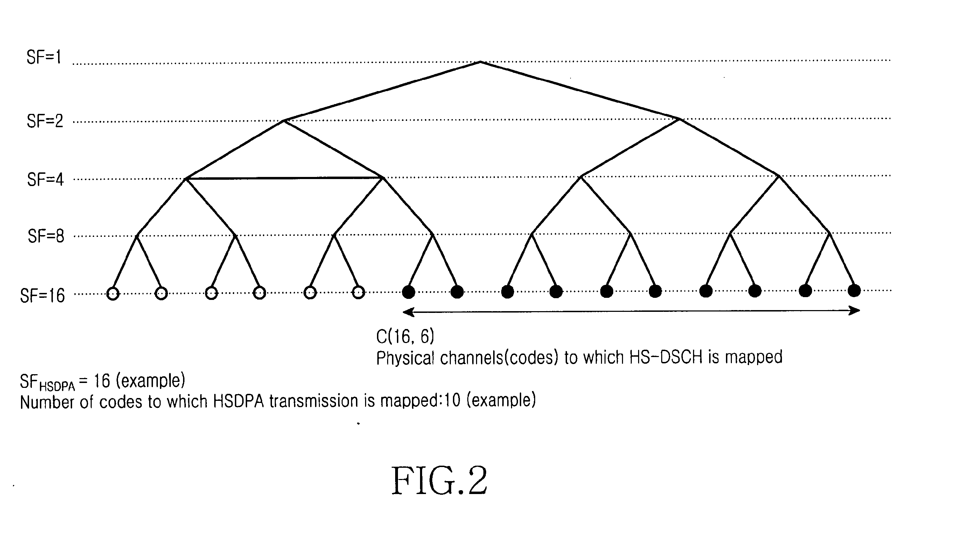

FIG. 2 is a diagram illustrating a typical example of channelization codes allocated in HSDPA. Referring to FIG. 2, respective channelization codes are denoted by C(i,j) according to their positions in a code tree. In the C(i,j), a variable 'i' denotes a spreading factor, and a variable 'j' denotes the order of the channelization code tree from the leftmost side.

A channelization code C(16,0) has a spreading factor (SF) of 16 and is located in a first position from the leftmost side. In FIG. 2, for example, 10 channelization codes of a 7th channelization code C(16,6) to a 16th channelization code C(16,15) are allocated. The channelization codes can be multiplexed to multiple UEs.

For example, assuming that particular UEs A, B and C are receiving a service, it is possible to allocate 4 channelization codes to the UE A, 5 channelization codes to the UE B, and 1 channelization code to the UE C at a time t0.

The number of channelization codes to be allocated to the UEs and their positions in the code tree are determined by a Node B. The determined number of channelization codes is transmitted to the respective UEs through a CCS of an HS-SCCH.

Next, a description will be made of modulation scheme (MS) information. As described above, HSDPA supports two modulation schemes of Quadrature Phase Shift Keying (QPSK) and 16QAM. Therefore, based on the MS, a UE can determine whether a modulation scheme of packet data, used in a Node B, is QPSK or 16QAM. The MS is allocated 1 bit.

The CCS and the MS are urgent information that the UE should quickly check, and as illustrated in Table 1, are located in a first part of a subframe of the HS-SCCH.

A description will now be made of a second part in the subframe. A transport block size (TBS) indicates a size of a block transmitted over a transport channel. The TBS is allocated 6 bits.

Next, a description will be made of a Hybrid ARQ Process ID (HAP). The Hybrid ARQ introduces the following two planes in order to increase transmission efficiency of Automatic Repeat reQuest (ARQ). A first plane is to perform an exchange of a retransmission request and response between a UE and a Node B, and a second plane is to temporarily store defective data and then combine the stored defective data with its retransmitted data. In addition, the HSDPA scheme introduces an n-channel Stop And Wait (SAW) HARQ scheme in order to make up for the defects of the conventional SAW ARQ scheme.

The n-channel SAW HARQ scheme continuously transmits a plurality of data packets even before an acknowledgement (ACK) for previous packet data is received, thereby increasing channel efficiency. That is, n logical channels are established between a UE and a Node B, and if each of the n logical channels can be identified by its unique time and channel number, a UE receiving packet data can determine a channel over which the received packet data is transmitted, and reorder data packets in proper order or soft-combine the corresponding packet data.

The HAP indicates a channel over which packet data is transmitted, among the n logical channels. The HAP is allocated 3 bits.

Next, redundancy and constellation version information (RV) will be described. As illustrated in Table 2 and Table 3, the RV is set different according to 16QAM and QPSK. The RV includes a parameter 's', a parameter 'r', and a parameter 'b'. Here, the parameter 's' and the parameter 'r' are used for rate matching. The parameter 'b' is constellation rearrangement information illustrated in Table 4, and is transmitted with one of 4 values.

Table 2

| $X_{rv}$ (value) | s | r | b |
|---|---|---|---|
| 0 | 1 | 0 | 0 |
| 1 | 0 | 0 | 0 |
| 2 | 1 | 1 | 1 |
| 3 | 0 | 1 | 1 |
| 4 | 1 | 0 | 1 |
| 5 | 1 | 0 | 2 |
| 6 | 1 | 0 | 3 |
| 7 | 1 | 1 | 0 |

Table 3

| $X_{rv}$ (value) | s | r |
|---|---|---|
| 0 | 1 | 0 |
| 1 | 0 | 0 |
| 2 | 1 | 1 |
| 3 | 0 | 1 |
| 4 | 1 | 2 |
| 5 | 0 | 2 |
| 6 | 1 | 3 |
| 7 | 0 | 3 |

Table 4

| Constellation version parameter, b | Output bit sequence | Operation |
|---|---|---|
| 0 | $s_1, s_2, s_3, s_4$ | None |
| 1 | $s_3, s_4, s_1, s_2$ | Swapping MSBs with LSBs |
| 2 | $s_1, s_2, \overline{s_3}, \overline{s_4}$ | Inversion of the logical values of LSBs |
| 3 | $s_3, s_4, \overline{s_1}, \overline{s_2}$ | 1 & 2 |

As described above, the control information transmitted over the HS-SCCH is determined depending on acknowledgement/negative acknowledgement (ACK/NACK) and channel quality indicator (CQI), which are information transmitted from a reception apparatus (or UE).

When transmitting a new packet upon receiving an ACK from the reception apparatus, a Node B sets a new data indicator (NDI) to inform the reception apparatus that transmission packet data is new data. At this point, the Node B informs the reception apparatus of RV and HAP parameters.

In setting the MS and the CCS, the Node B sets a modulation scheme and the number of channelization codes by considering a CQI transmitted from the reception side.

As a result, the control information transmitted over the HS-SCCH is determined according to ACK/NACK information and CQI information transmitted from the reception apparatus, before being transmitted.

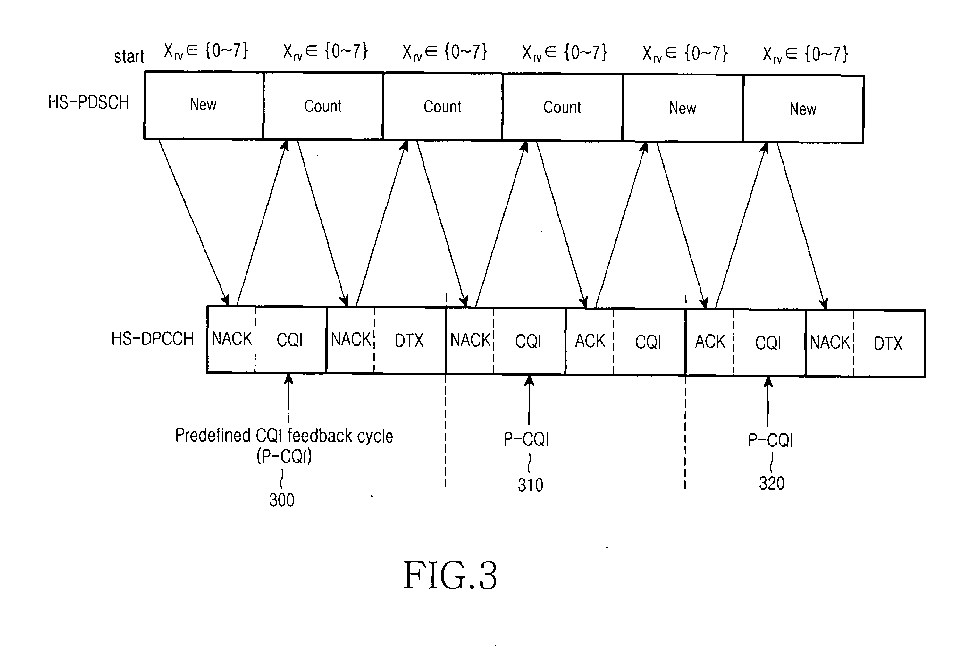

FIG. 3 is a diagram illustrating a flow of control information and transmission of packet data between a transmission apparatus and a reception apparatus. As illustrated in FIG. 3, when a packet is transmitted from a transmission apparatus to a reception apparatus, an NDI is set to New before being transmitted in order to inform the reception apparatus that the packet is initially transmitted. In addition, the transmission apparatus informs the reception apparatus of the parameters 's', 'r' and 'b' used for the transmission, through $X_{rv}$.

Then the reception apparatus decodes a received packet, checks whether there is an error in the packet, and sets ACK/NACK according to the error check result. The set ACK/NACK information is transmitted to the transmission apparatus using an HS-DPCCH.

If the reception apparatus sets a NACK and transmits the NACK to the transmission apparatus, the transmission apparatus should retransmit the corresponding packet. Therefore, the reception apparatus sets an NDI to Continue and randomly selects $X_{rv}$ from 0 to 7, before transmission.

However, if the reception apparatus transmits an ACK, the transmission apparatus should transmit a new packet. Therefore, the reception apparatus sets a NDI to New and randomly selects $X_{rv}$ from 0 to 7, before transmission.

As described above, the NDI indicates whether transmission data is Continue data or New data, and is allocated 1 bit.

Next, a UE-ID will be described. As described above, a reception apparatus receives a maximum of 4 HS-SCCHs from an upper layer. The receiver should monitor whether there is a channel including its own UE-ID every subframe. Here, the 16-bit UE-ID is not included as bit information, and is masked to a first part which is extended to 40 bits and then rate-matched, before being transmitted.

Therefore, the reception apparatus cannot directly compare the UE-ID with the decoded bit sequence, and uses reliability of a decoding process as a criterion for decision.

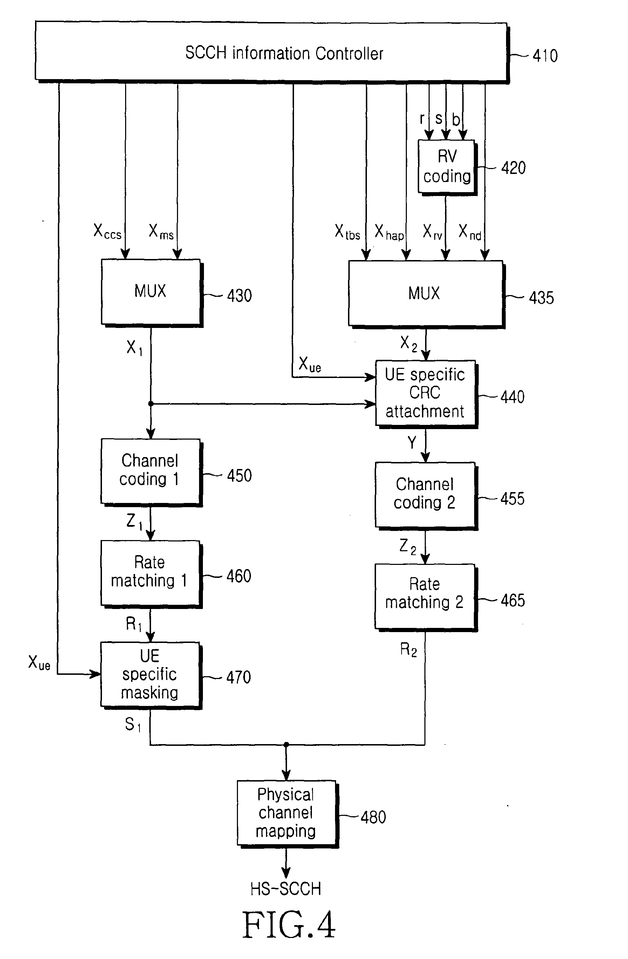

FIG. 4 is a block diagram illustrating a coding process of control information transmitted over an HS-SCCH. Referring to FIG. 4, an SCCH information controller 410 generates/controls HARQ-related information such as the parameters 's', 'r' and 'b' used for generating Modulation Scheme (MS), Channelization Code Set (CCS), Transport Block Size (TBS), Hybrid ARQ Process information (HAP), New Data Indicator (NDI), UE Identification (UE-ID) and Redundancy and constellation Version (RV). Here, the CCS and MS in the first part are output as $X_1$ through a first multiplexer (MUX) 430. The output $X_1$ is input to a first channel coding unit 450 and a UE specific Cyclic Redundancy Check (CRC) attachment unit 440.

However, the TBS, HAP, RV and NDI in the second part are output as $X_2$ through a second multiplexer 435. The output $X_2$ is combined with the $X_1$ and a 16-bit UE CRC $X_{ue}$ generated by a UE-ID in the UE specific CRC attachment unit 440. The entire sequences $(X_1+X_2)$ and $X_{UE}$ obtained by adding up the first part and the second part are output as Y.

The channel coding units 450 and 455 perform rate R=1/3 coding on their inputs $X_1$ and Y using convolutional codes.

That is, the first channel coding unit 450 performs R=1/3 convolutional coding on the 8-bit first part information $X_1$, and outputs the coding result $Z_1$ to a first rate matching unit 460, and the first rate matching unit 460 converts the output information of the first channel coding unit 450 to 40-bit information $R_1$. Thereafter, a UE specific masking unit 470 masks the output information of the first rate matching unit 460 with a UE-ID, and outputs the masking result to a physical channel mapping unit 480. The physical channel mapping unit 480 maps the output information of the UE specific masking unit 470 to a first part of an HS-SCCH.

The second channel coding unit 455 performs R=1/3 convolutional coding on the output information Y of the UE specific CRC attachment unit 440, and outputs the coding result $Z_2$ to a second rate matching unit 465, and the second rate matching unit 465 converts the output information of the second channel coding unit 455 to 80-bit information $R_2$, and outputs the rate matching result to the physical channel mapping unit 480. The physical channel mapping unit 480 maps the output information of the second rate matching unit 465 to a second part of the HS-SCCH.

As described above, when transmitting data over an HS-PDSCH, the transmission apparatus transmits control information over the HS-SCCH, two slots ahead of the HS-PDSCH, thereby providing information required for demodulating and decoding the HS-PDSCH.

Then the reception apparatus demodulates an HS-PDSCH depending on the control information transmitted over the HS-SCCH, and if control information to be transmitted over the HS-SCCH is derived from a CQI inappropriate for the current channel information, there is a high possibility that an error will occur in the control information. In this context, the current standard adopts a method in which an upper layer determines a QCI transmission cycle and transmits the CQI transmission cycle information over a physical channel.

Therefore, the reception apparatus should transmit a CQI to the transmission apparatus at periods determined based on the CQI transmission cycle information provided from the upper layer.

Here, assuming that the CQI transmission cycle is so short that the reception apparatus should frequently transmit the CQI to the transmission apparatus, the transmission apparatus can acquire correct information on the channel quality, but interference occurs frequently between reception apparatuses. The frequent transmission of the channel quality information where the channel quality does not change abruptly cannot contribute to improvement in performance of limited radio resources. However, when the CQI transmission cycle is too long, the transmission apparatus cannot acquire correct information on a channel from the reception apparatus, causing deterioration in system performance.

For these reasons, it is preferable to change the CQI transmission cycle according to circumstances. However, because the CQI transmission cycle is a coefficient determined by an upper layer, it is difficult to frequently change the CQI transmission cycle.

In order to prevent deterioration in system performance, the standardization organization proposes a method in which the reception apparatus additionally transmits a CQI when a NACK is generated. This method is effective when the channel environment becomes worse. However, when the channel environment improves, this method cannot consider the improvement in the channel environment.

Accordingly, there is a demand for a method in which while transmitting channel quality information in a CQI transmission cycle determined by an upper layer, a UE can transmit desired information in response to a request from a Node B at a time desired by the Node B.

## SUMMARY OF THE INVENTION

It is, therefore, an object of the present invention to provide an apparatus and method in which a Node B can receive desired information from a user equipment (UE), or the UE can receive desired information from the Node B in a radio communication system.

It is another object of the present invention to provide an apparatus and method in which a Node B sets an on-demand CQI (ODC) for analyzing a channel state of a UE and transmits the ODC over a control channel in a radio communication system.

In accordance with a first aspect of the present invention, there is provided a method for efficiently transmitting control information to transmit high-speed packet data in a Code Division Multiple Access (CDMA) mobile communication system. The method comprises the steps of transmitting, by a Node B, a control channel including an on-demand channel quality indicator (ODC) for analyzing a channel state due to transmission of high-speed packet data by a user equipment (UE) according to a transmission cycle of a channel quality indicator (CQI), determined by an upper layer; and transmitting, by the UE, a CQI to the Node B according to the ODC included in the control channel.

In accordance with a second aspect of the present invention, there is provided a transmission apparatus for efficiently transmitting control information to transmit high-speed packet data in a Code Division Multiple Access (CDMA) mobile communication system. The apparatus comprises a controller for transmitting a channel quality indicator (CQI) in a predetermined subframe cycle, and applying an on-demand CQI (ODC) for analyzing a channel state of a user equipment (UE) by discontinuous transmission (DTX)-processing the CQI in the subframe cycle; and a transmitter for mapping downlink control information including the ODC to a high speed shared control channel (HS-SCCH) before transmission.

In accordance with a third aspect of the present invention, there is provided a method for transmitting/receiving packet data in a mobile communication system. The method comprises the steps of transmitting, by a first transceiver, packet data and control information for enabling demodulation of the packet data to a second transceiver; receiving, by the second transceiver, the control information and the packet data; and demodulating, by the second transceiver, the packet data according to the control information, and transmitting ACK/NACK information for indicating whether there is an error in the packet data, and channel state information for the second transceiver, to the first transceiver; wherein the second transceiver transmits channel state information to the first transceiver according to a predetermined channel state information transmission cycle, and transmits channel state information regardless of the channel state information transmission cycle upon receiving an on-demand channel quality indicator (ODC) from the first transceiver.

## BRIEF DESCRIPTION OF THE DRAWINGS

The above and other objects, features and advantages of the present invention will become more apparent from the following detailed description when taken in conjunction with the accompanying drawings in which:

FIG. 1 is a diagram illustrating channels transmitted through a downlink in a conventional high speed downlink packet access service;

FIG. 2 is a diagram illustrating an example of orthogonal variable spreading factor codes allocated in a conventional high speed downlink packet access service;

FIG. 3 is a diagram schematically illustrating a control channel transmitting a conventional high speed downlink packet in a high speed downlink packet access service;

FIG. 4 is a block diagram illustrating a coding process of a control channel in a conventional high speed downlink packet access service;

FIG. 5 is a diagram schematically illustrating a control channel transmitting a high speed downlink packet according to an embodiment of the present invention;

FIG. 6 is a block diagram illustrating a coding process of a control channel according to an embodiment of the present invention;

FIG. 7 is a diagram illustrating a process of generating a control channel including a channel quality indicator according to an embodiment of the present invention; and

FIG. 8 is a graph illustrating the performance improvement according to an embodiment of the present invention.

## DETAILED DESCRIPTION OF THE PREFERRED EMBODIMENTS

Several embodiments of the present invention will now be described in detail with reference to the accompanying drawings. In the following description, a detailed description of known functions and configurations incorporated herein has been omitted for conciseness.

The embodiments of the present invention provide an apparatus and method for transmitting control information when a Node B desires to acquire, from a user equipment (UE), specific information for data retransmission for support of high-speed packet data, or the UE desires to receive, from the Node B, specific information for reception of the high-speed packet data in a Wideband Code Division Multiple Access (WCDMA) mobile communication system.

That is, the embodiments of the present invention provide an apparatus and method in which a Node B can receive information for analyzing a channel state or status of a UE using a specific field of a control channel. Advantageously, the embodiments of the present invention can allow the Node B or the UE to acquire desired information at a desired time, thereby efficiently improving the entire performance of a mobile communication system. In addition, the embodiments of the present invention enable additional information transmission without an increase in the number of control information bits.

With reference to Table 5, a description will now be made of control information bits transmitted over a high speed-shared control channel (HS-SCCH) according to an embodiment of the present invention. As illustrated in Table 5, the proposed HS-SCCH is divided into two parts: a first part comprising channelization code set (CCS) and modulation scheme (MS) information as recommended in the current standard and a second part including transport block size (TBS), Hybrid Automatic Repeat reQuest (ARQ) Process (HAP), redundancy and constellation version information (RV), on-demand channel quality indicator (ODC), and user equipment Identification (UE-ID) information.

Compared with the prior art based on Table 1, an embodiment of the present invention sets an On-Demand CQI (ODC) instead of the existing NDI and transmits the ODC as control information in order to transmit information for analyzing a channel state of a reception apparatus in order to prevent performance deterioration of a system due to packet data transmission.

The definition of an ODC allows a reception apparatus to periodically receive a channel state. However, the reception apparatus receives a modified CQI as the occasion demands. In addition, Table 5 includes a new definition of an RV.

Table 5

| 1st part | 2nd part |
|---|---|
| Channelization code set info (7) | Transport block size info (6) |
| Modulation scheme info (1) | Hybrid ARQ process ID (3) |
|  | Redundancy and constellation version info (3) |
|  | On-demand CQI (1) |
|  | UE-ID (16) |

Table 6 illustrates RV coding for 16 Quadrature Amplitude Modulation (QAM), and Table 7 illustrates RV coding for Quadrature Phase Shift Keying (QPSK).

Table 6

| $X_{rv}$ (value) | s | r | b |
|---|---|---|---|
| 0 | 1 | 0 | 0 |
| 1 | 0 | 0 | 0 |
| 2 | 1 | 1 | 1 |
| 3 | 0 | 1 | 1 |
| 4 | 1 | 0 | 1 |
| 5 | 1 | 0 | 2 |
| 6 | 1 | 0 | 3 |
| 7 | 1 | 1 | 0 |

Table 7

| $X_{rv}$ (value) | s | r |
|---|---|---|
| 0 | 1 | 0 |
| 1 | 0 | 0 |
| 2 | 1 | 1 |
| 3 | 0 | 1 |
| 4 | 1 | 2 |
| 5 | 0 | 2 |
| 6 | 1 | 3 |
| 7 | 0 | 3 |

The maximum number of retransmissions, recommended in the current standard, is 4 or 8, and the order of $X_{rv}$ has not been defined. Therefore, if it is assumed that the maximum number of retransmissions is 8, a specific $X_{rv}$ may not be used at all, or may be used a maximum of 8 times. For example, assuming that a reception apparatus continuously transmits NACK, the $X_{rv}$ are used as follows.

Example (1)

Initial transmission: $X_{rv} = 0$
1st retransmission: $X_{rv} = 1$
2nd retransmission: $X_{rv} = 2$
3rd retransmission: $X_{rv} = 3$
4th retransmission: $X_{rv} = 4$
5th retransmission: $X_{rv} = 6$
6th retransmission: $X_{rv} = 7$
7th retransmission: $X_{rv} = 2$

In Example (1), $X_{rv}=5$ is not used at all, $X_{rv}=2$ is used twice.

Example (2)

Initial transmission: $X_{rv} = 0$
1st retransmission: $X_{rv} = 0$

2nd retransmission: $X_{rv}$ = 0
3rd retransmission: $X_{rv}$ = 0
4th retransmission: $X_{rv}$ = 0
5th retransmission: $X_{rv}$ = 0
6th retransmission: $X_{rv}$ = 0
7th retransmission: $X_{rv}$ = 0

In Example (2), all transmissions use the same $X_{rv}$. However, if the number of retransmissions is 8, it is preferable that $X_{rv}$=0 to $X_{rv}$=7 should be uniformly used as shown in Example (3).

Example (3)

Initial transmission: $X_{rv}$ = 0
1st retransmission: $X_{rv}$ = 1
2nd retransmission: $X_{rv}$ = 2
3rd retransmission: $X_{rv}$ = 3
4th retransmission: $X_{rv}$ = 4
5th retransmission: $X_{rv}$ = 5
6th retransmission: $X_{rv}$ = 6
7th retransmission: $X_{rv}$ = 7

In this embodiment of the present invention, a Node B maps the number of transmissions to $X_{rv}$, and a UE can acquire an RV from an $X_{rv}$ previously determined with the Node B, and recognize initial transmission and the number of retransmissions.

Although this embodiment of the present invention shows a typical example of a method for distinguishing between initial transmission and retransmission, if the maximum number of retransmissions is less than or equal to 8, it is also possible to indicate the number of transmissions using the $X_{rv}$. In this method of indicating whether the current transmission is initial transmission or retransmission using $X_{rv}$, the NDI is unnecessary.

Therefore, this embodiment of the present invention determines an NDI using an $X_{rv}$, and allocates an ODC for analyzing an uplink channel state with 1 bit instead of allocating the NDI.

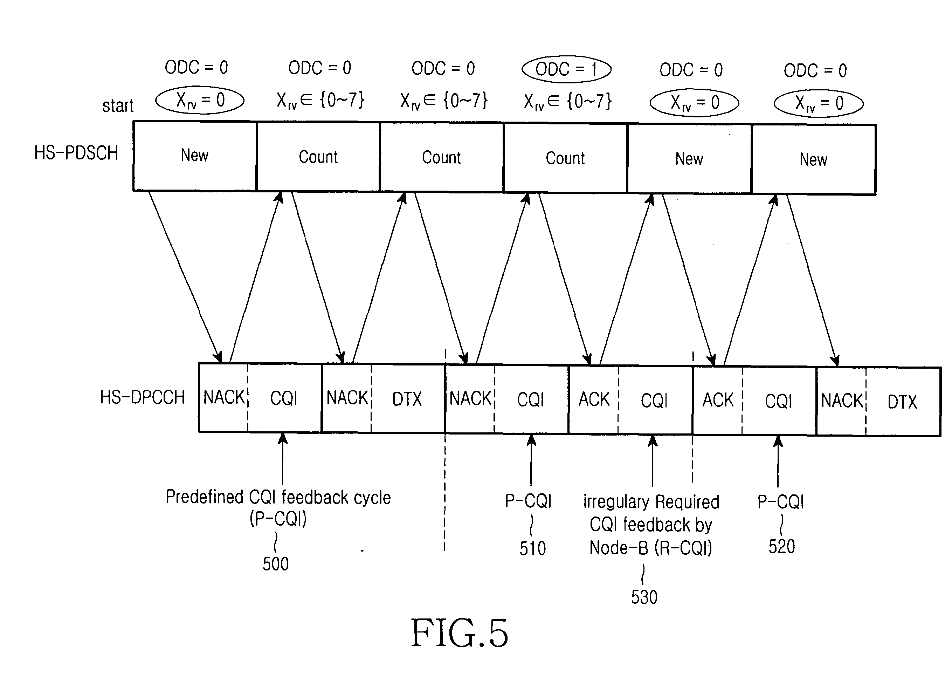

FIG. 5 is a diagram illustrating a control information flow between a transmission apparatus and a reception apparatus according to an embodiment of the present invention. As illustrated in FIG. 5, the transmission apparatus sets $X_{rv}$ to 0 during initial packet transmission. Upon receiving the packet, the reception apparatus recognizes that the packet transmitted by the transmission apparatus is an initially transmitted packet, determining that the $X_{rv}$ is set to 0. In addition, the transmission apparatus sets an ODC to a 2-subframe value which is a predefined CQI feedback cycle. That is, the transmission apparatus sets the ODC such that it receives a CQI from the reception apparatus every 2 subframes.

In FIG. 5, the transmission apparatus sets the channel quality information based on a predefined cycle to a predefined-CQI feedback cycle (P-CQI), or sets channel quality information required by the transmission apparatus to a required-CQI feedback cycle (R-CQI). That is, in order to allow a UE to transmit CQI information for analyzing an uplink channel state, i.e., to allow the UE to periodically transmit a P-CQI over a high speed dedicated physical control channel (HS-DPCCH), a Node B sets the ODC to 0 every 2 subframes. In addition, the Node B can perform discontinuous transmission (DTX) on a subframe between 2 subframes instead of transmitting the P-CQI.

Therefore, when continuously receiving NACK information from an HS-DPCCH for a predetermined subframe according to packet data on the HS-PDSCH, the Node B sets the ODC to 1 in order to analyze a channel state of a UE.

In an embodiment of the present invention, when a transmission apparatus requires channel quality information, it sets an ODC to 1, and a reception apparatus transmits an R-CQI through a subframe to be DTX-processed.

In this manner, a Node B acquires a required CQI at a required time by transmitting an ODC to a UE except for the period determined based on a CQI transmission cycle given from an upper layer. Therefore, a reduction in the CQI transmission cycle of the UE can decrease uplink interference, and an increase in the CQI transmission cycle can decrease errors in the CQI.

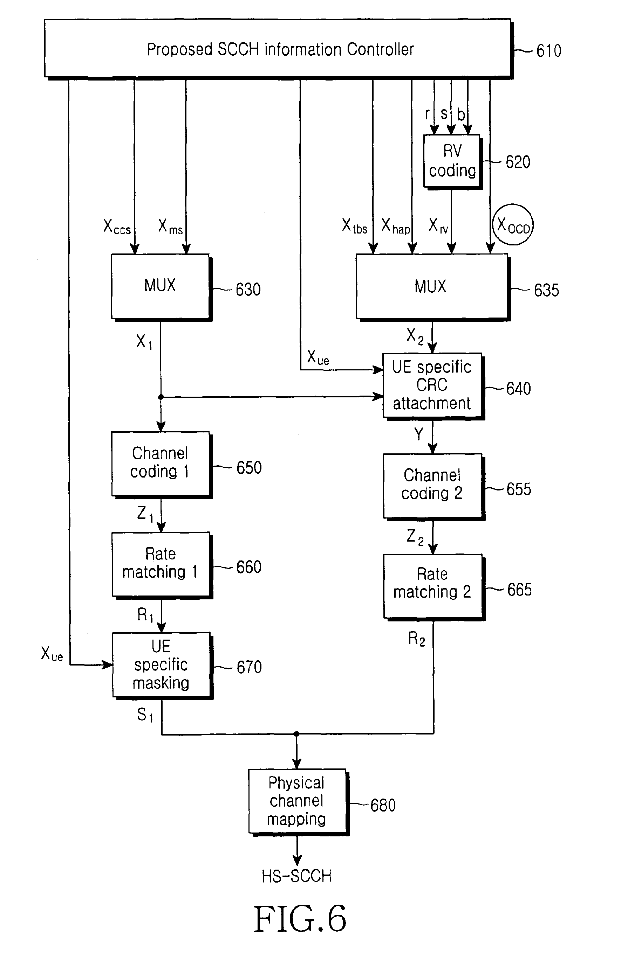

With reference to FIG. 6, a description will now be made of a process of transmitting control information bits over an HS-SCCH according to an embodiment of the present invention.

Referring to FIG. 6, an SCCH information controller 610 generates $X_{ms}$ (modulation scheme) and $X_{ccs}$ (channelization code set), and generates/controls HARQ-related information such as parameters 's', 'r' and 'b' used for generating $X_{tbs}$ (transport block size), $X_{hap}$ (hybrid ARQ process information), $X_{ODC}$ (On-Demand CQI), $X_{ue}$ (UE identifi-

cation) and $X_{rv}$ (redundancy and constellation version). The proposed SCCH information controller 610 changes the existing bit $X_{ndi}$ for an NDI to a bit $X_{ODC}$ for an ODC in order to guarantee the reliability of transmitted control information by analyzing a channel state of a UE, thereby preventing a transmission error of packet data.

The $X_{ccs}$ and $X_{ms}$ in a first part are output as $X_1$ through a first multiplexer (MUX) 630. The output $X_1$ is input to a first channel coding unit 650 and a UE specific cyclic redundancy check (CRC) attachment unit 640.

The $X_{tbs}$, $X_{hap}$, $X_{rv}$ and $X_{ODC}$ in a second part are output as $X_2$ through a second multiplexer 635. The output $X_2$ is combined with the $X_1$ and a 16-bit UE CRC $X_{ue}$ generated by a UE-ID in the UE specific CRC attachment unit 640. The output Y of the UE specific CRC attachment unit 640 is applied to a second channel coding unit 655.

The channel coding units 650 and 655 preferably perform R=1/3 coding on their inputs $X_1$ and Y using convolutional codes.

That is, the first channel coding unit 650 performs R=1/3 convolutional coding on the 8-bit first part information $X_1$, and outputs the coding result $Z_1$ to a first rate matching unit 660, and the first rate matching unit 660 converts the output information of the first channel coding unit 650 to 40-bit information $R_1$. Thereafter, a UE specific masking unit 670 masks the output information of the first rate matching unit 660 with a UE-ID, and outputs the masking result to a physical channel mapping unit 680. The physical channel mapping unit 680 maps the output information of the UE specific masking unit 670 to a first part of a HS-SCCH.

The second channel coding unit 655 performs R=1/3 convolutional coding on the output information Y of the UE specific CRC attachment unit 640, and outputs the coding result $Z_2$ to a second rate matching unit 665, and the second rate matching unit 665 converts the output information of the second channel coding unit 655 to 80-bit information $R_2$, and outputs the rate matching result to the physical channel mapping unit 680. The physical channel mapping unit 680 maps the output information of the second rate matching unit 665 to a second part of the HS-SCCH.

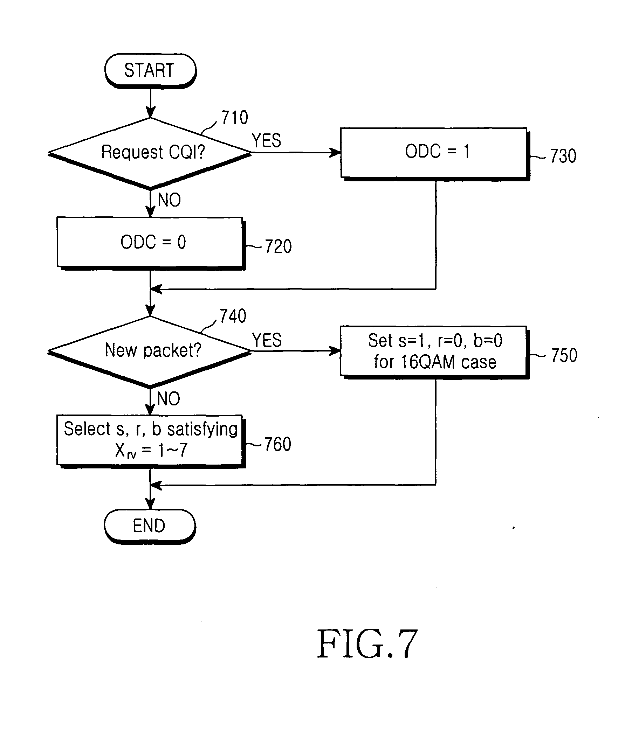

That is, an algorithm for the proposed SCCH information controller 610 adds a process of setting an ODC and a process of selecting an RV parameter for indicating initial transmission/retransmission, to the conventional SCCH information controller 410 in accordance with an embodiment of the present invention. The algorithm for the proposed SCCH information controller 610 will now be described with reference to FIG. 7.

FIG. 7 is a diagram illustrating a modified algorithm for an SCCH information controller according to an embodiment of the present invention. Referring to FIG. 7, if a Node B desires to request a CQI from a UE, the Node B sets an ODC to 1, otherwise, the Node B sets the ODC to 0.

If it is determined in step 710 that the Node B desires to request a CQI from a UE, the Node B proceeds to step 730. In step 730, the Node B sets the DOC to 1. However, if it is determined in step 710 that the Node B does not desire to request the CQI, i.e., desires to receive the periodically transmitted channel quality information, the Node B proceeds to step 720 where it sets the ODC to 0. That is, in transmitting control information, the Node B sets the ODC by considering a channel state of a UE.

If it is determined in step 740 that the Node B desires to transmit a new packet, the Node B proceeds to step 750 where it sets s=1 and r=0, and sets b=0 for 16QAM, outputting $X_{rv}$=0. However, if it is determined in step 740 that the Node B desires to retransmit a previous packet, the Node B proceeds to step 760 where it selects parameters 's', 'r', and 'b' satisfying $X_{rv}$=1 to $X_{rv}$=7.

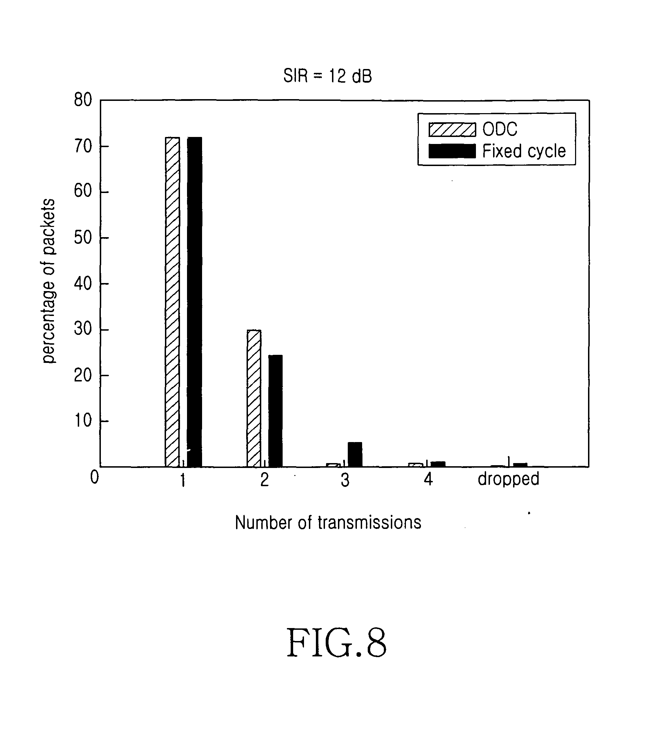

FIG. 8 is a graph illustrating a comparison in retransmission statistics between the conventional method in which a UE receives a CQI transmission cycle from an upper layer and transmits only a P-CQI and the method in accordance with an embodiment of the present invention in which a reception apparatus additionally transmits a CQI upon generation of NACK.

As illustrated in FIG. 8, as the number of retransmissions increases, the amount of packet data remarkably decreases in the embodiment where an ODC is set, thereby increasing the entire throughput of the system.

In conclusion, in the embodiments of the present invention, while the UE transmits a CQI in a CQI transmission cycle determined by an upper layer, a Node B can allow a UE to transmit a CQI in response to a request from the Node B at a time desired by the Node B, thereby efficiently decreasing uplink interference and correctly acquiring channel quality information. In addition, the Node B determines an MS and a TBS appropriate for a transport channel according to the acquired CQI, thereby improving system performance.

As described above, in embodiments of the present invention, a UE transmits a CQI for transmission of high-speed packet data in a CQI transmission cycle determined by an upper layer, the UE additionally transmits its CQI in response to a request from the Node B, thereby efficiently decreasing uplink interference. In addition, a Node B determines an MS and a TBS appropriate for a transport channel of the UE by correctly analyzing CQI information of the UE according to a channel condition, thereby improving system performance. Therefore, the Node B can acquire information necessary for transport channel allocation at a desired time, thereby efficiently improving the entire performance of the system.

While the invention has been shown and described with reference to a certain embodiments thereof, it should be understood by those skilled in the art that various changes in form and details may be made therein without departing from the spirit and scope of the invention as defined by the appended claims.

**Claims**

1. A method for efficiently transmitting control information in order to transmit high-speed packet data in a Code Division Multiple Access (CDMA) mobile communication system, the method comprising the steps of:

    transmitting, by a Node B, a control channel including an on-demand channel quality indicator (ODC) for analyzing a channel state due to transmission of high-speed packet data by a user equipment (UE) according to a transmission cycle of a channel quality indicator (CQI), determined by an upper layer; and
    transmitting, by the UE, a CQI to the Node B according to the ODC in the control channel.

2. The method of claim 1, wherein the step of transmitting a control channel further comprises the step of setting, by the Node B, the ODC such that the UE transmits a CQI every 2 predetermined subframes.

3. The method of claim 1, wherein the step of transmitting a control channel further comprises the step of setting, by the Node B, the ODC for analyzing a current channel state of the UE in a subframe between 2 predetermined subframes, and transmitting the set ODC to the UE over the control channel.

4. The method of claim 1, wherein the step of transmitting a control channel further comprises the step of setting, by the Node B, the ODC to a one for receiving the CQI at a non-predetermined interval.

5. The method of claim 1, wherein the step of transmitting a control channel further comprises the step of setting, by the Node B, the ODC to a zero for receiving the CQI at a predetermined interval.

6. A transmission apparatus for efficiently transmitting control information in order to transmit high-speed packet data in a Code Division Multiple Access (CDMA) mobile communication system, the apparatus comprising:

    a controller for transmitting a channel quality indicator (CQI) in a predetermined subframe cycle, and applying an on-demand CQI (ODC) for analyzing a channel state of a user equipment (UE) by discontinuous transmission (DTX)-processing the CQI in the subframe cycle; and
    a transmitter for mapping downlink control information including the ODC to a high speed shared control channel (HS-SCCH) before transmission.

7. The transmission apparatus of claim 6, wherein the controller controls the transmitter to periodically transmit the CQI, set the ODC for analyzing a channel state of a UE according to the subframe cycle, and transmit the set ODC over the HS-SCCH.

8. The transmission apparatus of claim 6, wherein the controller sets the ODC such that a reception apparatus transmits a CQI indicating a channel state every 2 predetermined subframes.

9. The transmission apparatus of claim 6, wherein the controller sets the ODC such that a reception apparatus transmits a CQI indicating a current channel state of the reception apparatus in a subframe between 2 predetermined subframes.

10. The transmission apparatus of claim 6, wherein the controller sets the ODC to a one such that a reception apparatus transmits a CQI indicating a current channel state of the reception apparatus at a non-predetermined interval.

11. The transmission apparatus of claim 6, wherein the controller sets the ODC to a zero such that a reception apparatus transmits a CQI indicating a current channel state of the reception apparatus at a predetermined interval.

12. The transmission apparatus of claim 6, wherein the channel state comprises a channel status.

13. A method for transmitting/receiving packet data in a mobile communication system, the method comprising the steps of:

    transmitting, by a first transceiver, packet data and control information for enabling demodulation of the packet data to a second transceiver;
    receiving, by the second transceiver, the control information and the packet data; and
    demodulating, by the second transceiver, the packet data according to the control information, and transmitting ACK/NACK information indicating whether or not there is an error in the packet data, and channel state information for the second transceiver, to the first transceiver, wherein the second transceiver transmits channel state information to the first transceiver according to a predetermined channel state information transmission cycle, and transmits channel state information regardless of the channel state information transmission cycle upon receiving an on-demand channel quality indicator (ODC) from the first transceiver.

14. The method of claim 13, wherein the ODC is transmitted when the first transceiver continuously receives NACK information from the second transceiver a predetermined number of times.

EP 1 566 913 A1

HS-SCCH

$3 \times T_{slot}$ 7680 chips

HS-PDSCH

$3 \times T_{slot}$ 7680 chips

HS-DSCH sub-frame

$\tau_{HS-PDSCH}$ ($2 \times T_{slot}$ 5120 chips)

FIG.1

C(16, 6)
Physical channels(codes) to which HS-DSCH is mapped

SF$_{HSDPA}$ = 16 (example)
Number of codes to which HSDPA transmission is mapped:10 (example)

FIG.2

EP 1 566 913 A1

start $X_{rv} \in \{0\sim7\}$     $X_{rv} \in \{0\sim7\}$     $X_{rv} \in \{0\sim7\}$     $X_{rv} \in \{0\sim7\}$     $X_{rv} \in \{0\sim7\}$     $X_{rv} \in \{0\sim7\}$

HS-PDSCH | New | Count | Count | Count | New | New

HS-DPCCH | NACK | CQI | NACK | DTX | NACK | CQI | ACK | CQI | ACK | CQI | NACK | DTX

Predefined CQI feedback cycle
(P-CQI)

300

P-CQI

310

P-CQI

320

FIG.3

FIG.4

ODC = 0  ODC = 0  ODC = 0  (ODC = 1)  ODC = 0  ODC = 0

start  ($X_{rv} = 0$)  $X_{rv} \in \{0\sim7\}$  $X_{rv} \in \{0\sim7\}$  $X_{rv} \in \{0\sim7\}$  ($X_{rv} = 0$)  ($X_{rv} = 0$)

| HS-PDSCH | New | Count | Count | Count | New | New |

| HS-DPCCH | NACK | CQI | NACK | DTX | NACK | CQI | ACK | CQI | ACK | CQI | NACK | DTX |

Predefined CQI feedback cycle
(P-CQI)

500

P-CQI

510

irregulary Required
CQI feedback by
Node-B (R-CQI)

530

P-CQI

520

FIG.5

Proposed SCCH information Controller — 610

r  s  b

RV coding — 620

$X_{ccs}$  $X_{ms}$  $X_{tbs}$  $X_{hap}$  $X_{rv}$  $(X_{OCD})$

MUX — 630  MUX — 635

$X_1$  $X_2$

$X_{ue}$

UE specific CRC attachment — 640

Y

Channel coding 1 — 650  Channel coding 2 — 655

$Z_1$  $Z_2$

Rate matching 1 — 660  Rate matching 2 — 665

$R_1$  $R_2$

$X_{ue}$  UE specific masking — 670

$S_1$

Physical channel mapping — 680

HS-SCCH

# FIG.6

START

710
Request CQI? — YES → ODC = 1 — 730

NO

ODC = 0 — 720

740
New packet? — YES → Set s=1, r=0, b=0 for 16QAM case — 750

NO

Select s, r, b satisfying $X_{rv} = 1\sim7$ — 760

END

FIG.7

FIG.8

**European Patent Office**

## EUROPEAN SEARCH REPORT

Application Number

EP 05 00 3483

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | 3GPP: "TR 25.899 V0.1.0 (2003-03) HSDPA Enhancements; (Release 6)"[Online] June 2003 (2003-06), XP002328238 VALBONNE, FRANCE Retrieved from the Internet: URL:http://www.3gpp.org/ftp/tsg_ran/WG1_RL 1/TSGR1_32/Docs/Zips/R1-030382.zip> [retrieved on 2005-05-13] * paragraph [5.1.2] * * paragraph [6.1.2] * ----- | 1-14 | H04L1/00 H04Q7/38 H04B7/26 |
| A | "Universal Mobile Telecommunications System (UMTS); UTRA High Speed Downlink Packet Access (HSDPA); Overall description; Stage 2 (3GPP TS 25.308 version 5.4.0 Release 5); ETSI TS 125 308" ETSI STANDARDS, EUROPEAN TELECOMMUNICATIONS STANDARDS INSTITUTE, SOPHIA-ANTIPOLIS, FR, vol. 3-R2, no. V540, March 2003 (2003-03), XP014008696 ISSN: 0000-0001 * paragraph [8.2.2] * ----- | | |
| A | 3GPP: "ETSI TS 125.331 v5.5.0Universal Mobile Telecommunications System (UMTS); Radio Resource Control (RRC) protocol specification (3GPP TS 25.331 version 5.5.0 Release 5)" ETSI STANDARDS, EUROPEAN TELECOMMUNICATIONS STANDARDS INSTITUTE, SOPHIA-ANTIPOLIS, FR, March 2003 (2003-03), XP002328239 VALBONNE, FRANCE * paragraph [10.3.6.40A] * ----- | | |

|  | TECHNICAL FIELDS SEARCHED (Int.Cl.7) |
|---|---|
|  | H04L H04Q H04B |

The present search report has been drawn up for all claims

| Place of search | Date of completion of the search | Examiner |
|---|---|---|
| Munich | 17 May 2005 | Draper, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)